**Europäisches Patentamt**

**European Patent Office**

**Office européen des brevets**

(19)

(11) Veröffentlichungsnummer: **0 165 522**
**B1**

(12)     EUROPÄISCHE PATENTSCHRIFT

(45) Veröffentlichungstag der Patentschrift:
**28.12.88**

(21) Anmeldenummer: **85106778.5**

(22) Anmeldetag: **01.06.85**

(51) Int. Cl.⁴: **B 29 C 67/22,** B 32 B 31/10,
     B 44 C 1/20 // B29K23:00

(54) **Verfahren zum Herstellen einer geschäumten Polyolefinplatte.**

(30) Priorität: **19.06.84 DE 3422682**

(43) Veröffentlichungstag der Anmeldung:
**27.12.85 Patentblatt 85/52**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**AT-B- 313 595**
**CH-A- 556 246**
**DE-A- 2 620 731**
**DE-B- 1 504 106**
**DE-B- 2 607 877**
**DE-C- 1 694 194**
**US-A- 3 464 934**

(73) Patentinhaber: **Hüls Troisdorf Aktiengesellschaft,
Postfach 11 65, D-5210 Troisdorf (DE)**

(72) Erfinder: **Hargarten, Werner, Zum Höhenberg,
D-5227 Windeck/Hoppengarten (DE)**
Erfinder: **Kautz, Rudolf, Drosselweg 5,
D-5202 Hennef 1 (DE)**

**Beschreibung**

Die Erfindung bezieht sich auf ein Verfahren zum Herstellen einer geschäumten Polyolefinplatte, bei dem ein Polyolefin oder ein Gemisch aus Polyolefin mit Kautschuk und/oder einem damit mischbaren Kunststoff mit einem Vernetzungsmittel und einem Treibmittel homogen vermischt wird und unterhalb der Vernetzungstemperatur des Treibmittels und des Vernetzungsmittels zu einer plattenförmigen Matrix geformt wird, und bei dem ein- oder beidseitig auf die Matrix eine Folie aus einem thermoplastischen Kunststoff, insbesondere auf Polyolefinbasis, aufgebracht wird und dann die mit der Folie versehene Matrix durch Erwärmen auf eine Temperatur oberhalb der Zersetzungstemperatur des Vernetzungsmittels und des Treibmittels vernetzt und verschäumt wird.

Aus der DE-C-1 694 194 ist ein gattungsgemässes Verfahren zur Herstellung eines verschäumten Polyolefinschichtstoffes bekannt. Eine nach diesem Verfahren hergestellte geschäumte Polyolefinplatte kann nach dem Verschäumen noch einer Prägebehandlung unterzogen werden.

Auf diese Weise werden verschäumte Polyolefinschichtstoffe mit dekorativer Oberfläche geschaffen. Es ist auch noch möglich, die so hergestellten verschäumten Polyolefinschichtstoffe anschliessend zu bedrucken oder zu beflocken. Aus der DE-B-2 607 877 ist es bekannt, verschäumte Polyolefinschichtstoffe herzustellen, die ein- oder beidseitig mit einer dünnen Kunststoffolie verbunden sind.

Aus der CH-A-556 246 ist ein Verfahren zur Herstellung von Schaumstoff-Flächengebilden mit reliefartig strukturierter Oberfläche bekannt, bei dem im Verlaufe des Schäumvorgangs an vorbestimmten Stellen der Grundschicht, entsprechend einem aufgebrachten Muster, ein die Schäumung inhibierendes oder beschleunigendes Mittel in die Grundschicht eindringt. Dieses Verfahren eignet sich nur für weichmacherhaltige Kunststoffe wie Weich-PVC, nicht jedoch für Polyolefine.

Der Erfindung liegt die Aufgabe zugrunde, ausgehend von einem gattungsgemässen Verfahren ein Verfahren zur Herstellung einer verschäumten Polyolefinschaumstoffplatte zu schaffen, die eine dekorative und ausreichend strapazierfähige Oberfläche aufweist.

Zur Lösung dieser Aufgabe werden, ausgehend von dem gattungsgemässen Verfahren, die dem kennzeichnenden Teil des Anspruchs 1 zu entnehmenden Verfahrensschritte vorgeschlagen.

Mit der Erfindung wird in einem Verfahrensgang nicht nur eine mustermässige Farbgebung der Schaumstoffplatte bewirkt, sondern gleichzeitig eine leichte Profilierung der Oberfläche entsprechend den bedruckten Bereichen erzielt. Dieses Ergebnis war völlig überraschend, da in keiner Weise vorauszusehen war, dass die Matrix in den bedruckten, d.h. mit Druckfarbe belegten Bereichen stärker aufschäumen würde als in den übrigen Bereichen. Besonders vorteilhaft lässt sich die Erfindung mit Polyolefinfolien, insbesondere Polyethylenfolien durchführen, die transparent bis opak sein sollten, so dass der Farbdruck durchscheinen kann. Bei Einsatz von Polyolefinfolien sollten diese eine oxidierend wirkende Oberflächenbehandlung erfahren haben, beispielsweise durch Koronaentladung. Für das Bedrucken der Polyolefinfolien kommen alle bekannten handelsüblichen Druckfarben, enthaltend Bindemittel und Farbmittel sowie ggf. Lösungsmittel in Frage. Vorteilhaft kann zum Bedrucken der Polyolefinfolien das Anilindruckverfahren (Flexodruck) angewendet werden. Auch das Tiefdruckverfahren lässt sich für grössere zu bedruckende Mengen vorteilhaft anwenden. Bekannte Druckfarben zum Bedrucken von Polyethylenfolien weisen üblicherweise als Bindemittelbasis Nitrocellulose auf. Die eingesetzten Farbmittel, Pigmente oder Farbstoffe richten sich nach der gewünschten Farbgebung. Der Farbaufdruck wird in einem Bereich von etwa 3 g/m$^2$ normalerweise sich bewegen. Aufgedruckt werden können Muster, aber auch Schriftzüge oder Zeichen, dies richtet sich je nach dem späteren Anwendungsgebiet der Schaumstoffplatte. Für das erfindungsgemässe Verfahren ist zu beachten, dass der Aufdruck auf die Matrix sich zusammen mit der Matrix beim Vernetzen und Verschäumen derselben ausdehnt und zwar in jeder Flächenrichtung. Die Grösse der Ausdehnung hängt hierbei von der Grösse der Ausdehnung der Matrix ab, d.h. von dem fertigen Raumgewicht der geschäumten Platte. Wenn beispielsweise eine Schaumstoffplatte mit einem Raumgewicht von 30 kg/m$^3$ hergestellt wird, bedeutet dies, dass sich der bedruckte Bereich in jeder Flächenrichtung um das zwei- bis dreifache vergrössert, d.h. die bedruckte Fläche vergrössert sich um das vier- bis neunfache. Dies hat ein Auseinanderziehen des Farbaufdruckes zur Folge.

Dünne Polyolefinfolien für die Kaschierung der Matrix werden dann eingesetzt, wenn diese Folie praktisch nur als Träger für die Druckfarbe dient bzw. eine feine dünne Versiegelung der Oberfläche der Schaumstoffplatte zusätzlich bewirken soll. Diese dünne Folie, beispielsweise im Bereich von 30 bis 100 µ, wird während des Verschäumens der Matrix so stark verstreckt, dass sie an der fertigen Schaumstoffplatte praktisch nicht mehr in Erscheinung tritt. Für die Fälle, wo jedoch eine zusätzliche Oberflächenveredelung durch die aufkaschierte Folie erzielt werden soll, wird vorteilhaft eine dickere Folie beispielsweise im Bereich von 100 bis 500 µ eingesetzt. Es ist möglich, eine mit einer solchen dickeren Folie kaschierte Schaumstoffplatte auch später noch oberflächlich zu prägen.

Die erfindungsgemäss dekorativ ausgestatteten Schaumstoffplatten können beispielsweise als Campingmatten verwendet werden und mit Streifen, Karos, Blumen, Beschriftungen versehen werden, sie können auch als Verpackungsmaterialien eingesetzt werden und mit einer Produktbeschriftung versehen werden. Es ist auch möglich, diese erfindungsgemässen Schaumstoffplatten in mehr technischer Hinsicht einzusetzen und beispielsweise mit aufgedruckten Markierungen zu versehen, hierbei ist beispielsweise der Einsatz im Kälte- und Wärmeschutz als Isolierung gedacht.

Die Auftragmengen der Druckfarbe liegen üblicherweise im Bereich von 1 bis 10 g/m$^2$, vorzugsweise 2 bis 5 g/m$^2$.

Das Prinzip der Herstellung der geschäumten Polyolefinplatte ist neben den bereits eingangs genannten Druckschriften beispielsweise auch in der DE-PS 1 694 130 beschrieben.

Die Erfindung wird nachfolgend in der Zeichnung beispielhaft näher erläutert. Es zeigen:

Fig. 1 schematisch den Querschnitt von Matrix und bedruckter Folie,

Fig. 2 schematisch den Querschnitt einer geschäumten Polyolefinplatte mit Bedruckung,

Fig. 3 die Aufsicht auf die Folie nach Figur 1 und

Fig. 4 die Aufsicht auf die Schaumstoffplatte nach Figur 2.

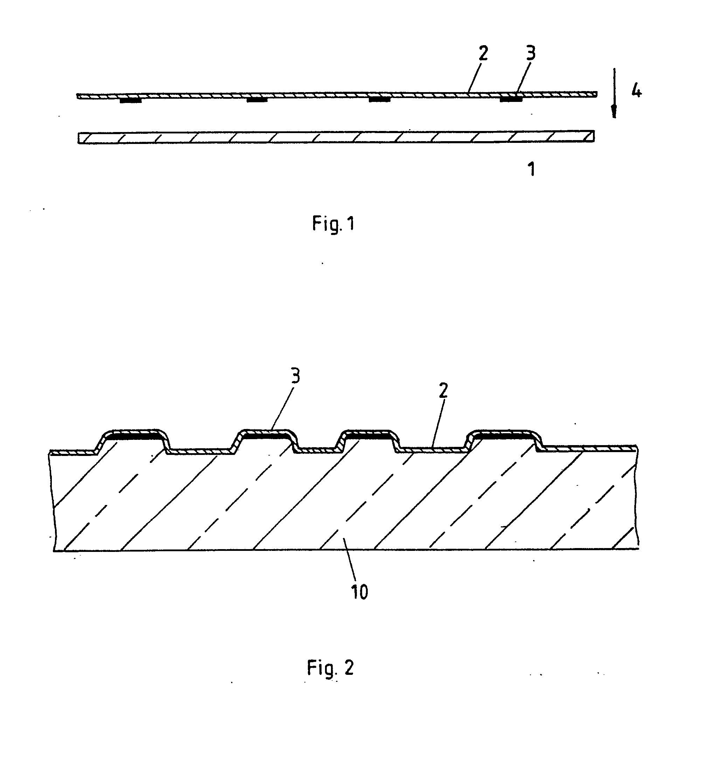

In der Figur 1 ist schematisch die Matrix 1 dargestellt, d.h. eine geformten Polyolefinplatte oder Bahn enthaltend unzersetztes Treibmittel und unzersetztes Vernetzungsmittel, so dass sich die Polyolefinplatte noch im kompakten d.h. ungeschäumten Zustand befindet. Diese Matrix 1 wird nun ein- oder beidseitig mit der Folie 2, beispielsweise einer Polyethylenfolie kaschiert, und nach dem Kaschieren wird die Matrix erwärmt und hierbei vernetzt und verschäumt. Entsprechend der dreidimensionalen Ausdehnung der Matrix 1 deht sich die Folie 2 mit aus. Die Folie 2 ist nun auf einer Seite mittels Druckfarbe mustermässig bedruckt, siehe die Druckbereiche 3. Die Folie 2 wird nun mit ihrer bedruckten Seite in Pfeilrichtung 4 auf die Matrix 1 kaschiert. Bei der nachfolgenden Vernetzung und Verschäumung entsteht dann das Produkt, wie es auszugsweise in Figur 2 im Querschnitt dargestellt ist. Die Matrix ist nunmehr zu der Schaumstoffplatte 10 aufgeschäumt, die gleichzeitig vernetzt ist. Hierbei handelt es sich um eine chemische Vernetzung, beispielsweise mittels eines Peroxids. In den Bereichen 3, wo sich die Druckfarbe auf der Matrix befindet, ist diese etwas stärker aufgeschäumt als in den übrigen Bereichen. Auf diese Weise ergeben sich entsprechend den Druckbereichen 3 leichte Erhebungen auf der Oberfläche der Schaumstoffplatte 10. Die Folie 2 hat sich entsprechend der Ausdehnung der Matrix ebenfalls gestreckt und hat die Volumenvergrösserung durch Verstrecken mitgemacht.

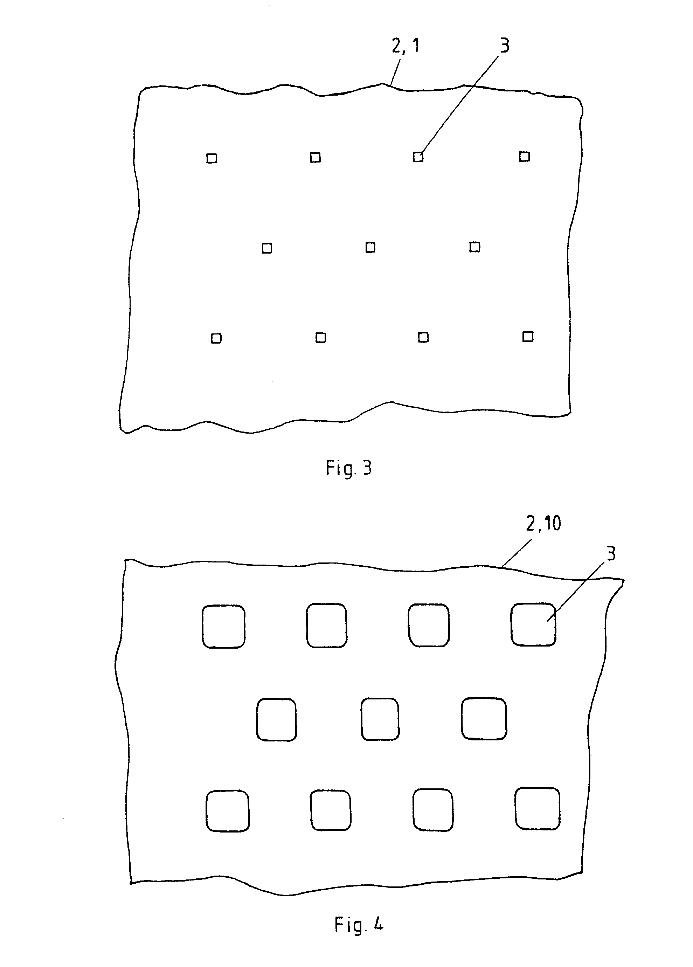

Aus dem Vergleich der Figuren 3 und 4 ist die nach der Vernetzung und Verschäumung aufgetretene Volumenvergrösserung und Flächenvergrösserung auch in den Druckbereichen 3 ersichtlich.

**Patentansprüche**

1. Verfahren zum Herstellen einer geschäumten Polyolefinplatte, bei dem ein Polyolefin oder ein Gemisch aus einem Polyolefin mit Kautschuk und/oder einem damit mischbaren Kunststoff mit einem Vernetzungsmittel und einem Treibmittel homogen vermischt und unterhalb der Zersetzungstemperatur des Treibmittels und des Vernetzungsmittels zu einer plattenförmigen Matrix geformt wird, und bei dem ein- oder beidseitig auf die Matrix eine Folie aus einem thermoplastischen Kunststoff, insbesondere auf Polyolefinbasis, aufgebracht wird und dann die mit der Folie versehene Matrix durch Erwärmen auf eine Temperatur oberhalb der Zersetzungstemperatur des Vernetzungsmittels und des Treibmittels vernetzt und verschäumt wird, dadurch gekennzeichnet, dass die Folie auf einer Oberflächenseite mustermässig mit Druckfarbe bedruckt und mit der bedruckten Oberfläche auf die Matrix aufgelegt wird, dass beim Verschäumen und Vernetzen der Matrix die mit Druckfarben versehenen Bereiche etwas stärker aufschäumen als die nicht mit Druckfarben versehenen Bereiche, so dass leicht erhabene bedruckte Bereiche auf der Oberfläche der verschäumten Polyolefinplatte gebildet werden, und dass die Druckfarbe weder vor noch während des Verschäumens in die Matrix bzw. den Schaum eindringt.

2. Verfahren nach Anspruch 1, dadurch gekennzeichnet, dass als Folie Polyethylenfolien einer Dicke von 30 bis 500 µ eingesetzt werden, ggf. eine oxidierend wirkende Oberflächenbehandlung erfahren haben.

3. Verfahren nach Anspruch 1 oder 2, dadurch gekennzeichnet, dass für das Bedrucken von Polyolefinen geeignete Druckfarben enthaltend Bindemittel und Farbmittel verwendet werden.

**Claims**

1. Process for producing a foamed polyolefine plate, in which a polyolefine or a mixture of a polyolefine with rubber and/or a plastics material, which can be mixed therewith, is homogeneously mixed with a cross-linking agent and a blowing agent and is shaped below the decomposition temperature of the blowing agent and the cross-linking agent into a plate-like matrix and in which a foil of a thermoplastic plastics, more particularly polyolefine-based, is applied to one or both sides of the matrix and the matrix provided with the foil is then cross-linked and foamed by heating to a temperature above the decomposition temperature of the cross-linking agent and of the blowing agent, characterised in that the foil is printed on a surface with printing ink in accordance with a pattern and is applied with the printed surface to the matrix, in that when foaming and cross-linking the matrix, the areas provided with printing inks foam up somewhat more intensely than those areas which are not provided with printing inks so that slightly raised printed areas are formed on the surface of the foamed polyolefine plate and in that the printing ink does not penetrate the matrix or the foam, either before or during the foaming.

2. Process according to claim 1, characterised in that polyethylene foils of a thickness of 30 to 500 µm are used as the foil, and have, if applicable, undergone an oxidizing surface treatment.

3. Process according to claim 1 or 2, characterised in that printing inks, which are suitable for printing polyolefines, are used which contain binding agents and colouring agents.

**Revendications**

1. Procédé de fabrication d'une plaque de polyoléfine cellulaire, dans lequel on mélange de façon homogène, avec un agent de réticulation et un agent porogène, une polyoléfine ou un mélange d'une polyoléfine avec du caoutchouc et/ou une matière plastique miscible avec et on moule ce mélange en une matrice en forme de plaque, au-dessous de la température de décomposition de l'agent porogène et de l'agent de réticulation, et dans lequel procédé on applique, sur un côté de la matrice ou sur les deux côtés, une feuille de matière thermoplastique, en particulier à base de polyoléfine, puis on réticule et fait mousser la matrice munie de la feuille, par chauffage à une température supérieure à la température de décomposition de l'agent de réticulation et de l'agent porogène, le procédé étant caractérisé en ce que la feuille porte d'un côté des impressions en forme de dessin, réalisées avec une encre d'impression, et qu'elle est appliquée avec la surface imprimée sur la matrice, et en ce que, lors du moussage et de la réticulation de la matrice, les régions pourvues de l'encre d'impression subissent un moussage un peu plus intense que celui que subissent les régions non pourvues de l'encre d'impression, de telle sorte qu'il se forme, à la surface de la plaque moussée de polyoléfines, des régions imprimées légèrement convexes, et que l'encre d'impression ne pénètre pas dans la matrice ou dans la mousse, ni avant ni pendant le moussage.

2. Procédé conforme à la revendication 1, caractérisé en ce que l'on utilise comme feuilles des feuilles de polyéthylène présentant une épaisseur de 30 à 500 µm, qui ont éventuellement subi un traitement superficiel oxydant.

3. Procédé conforme à la revendication 1 ou 2, caractérisé en ce que l'on utilise, pour l'impression des polyoléfines, des encres d'impression appropriées, contenant un liant et un pigment.

Fig. 1

Fig. 2

2, 1    3

Fig. 3

2,10
3

Fig. 4